**Europäisches Patentamt**

**European Patent Office**

**Office européen des brevets**

(19)

(11) Veröffentlichungsnummer: **0 340 234 B1**

# EUROPÄISCHE PATENTSCHRIFT

(12)

(45) Veröffentlichungstag der Patentschrift :
20.03.91 Patentblatt 91/12

(51) Int. Cl.⁵ : **B65G 15/08, B65G 39/12**

(21) Anmeldenummer : 88900691.2

(22) Anmeldetag : 09.12.87

(86) Internationale Anmeldenummer :
PCT/EP87/00766

(87) Internationale Veröffentlichungsnummer :
WO 88/04269 16.06.88 Gazette 88/13

(54) SCHLAUCHBAND-FÖRDERANLAGE.

(30) Priorität : 10.12.86 DE 3642279
21.11.87 DE 3739491
21.11.87 DE 3739512

(43) Veröffentlichungstag der Anmeldung :
08.11.89 Patentblatt 89/45

(45) Bekanntmachung des Hinweises auf die
Patenterteilung :
20.03.91 Patentblatt 91/12

(84) Benannte Vertragsstaaten :
AT BE CH DE FR GB IT LI LU NL SE

(56) Entgegenhaltungen :
DE-A- 3 506 947
DE-A- 3 606 129
GB-A- 2 092 977
Patent Abstracts of Japan, vol. 9, No. 179
(M-399)(1902), 24 July 1985

(73) Patentinhaber : **O & K Orenstein & Koppel
Aktiengesellschaft
Brunsbütteler Damm 144
W-1000 Berlin (DE)**

(72) Erfinder : **ENGST, Wilhelm
Dietrichstr. 9
W-3008 Garbsen 4 (DE)**
Erfinder : **HARTWIG, Markus
Heinrich-Brüning-Str. 6
W-5000 Köln 51 (DE)**
Erfinder : **ALLES, Rainer
Isernhagener Str. 7
W-3004 Isernhagen 1 (DE)**

EP 0 340 234 B1

## Beschreibung

Die Erfindung betrifft eine Schlauchband-Förderanlage, in der ein Fördergurt in geradlinig und kurvenförmig verlaufenden Streckenabschnitten, teils in flach ausgebreiteter oder gemuldeter Form und teils in Form eines durch stetige Krümmung in Querrichtung und Überlappung der Gurtlängsränder gebildeten, kreisförmigen oder im Kurvenbereich ovalen Schlauches über mit einer Vielzahl von entlang der Strecke angeordneten Trag- und Führungsrollenstationen zusammenwirkenden Trag-, Führungs- und Antriebsrollen abläuft, wobei im Bereich der Überlappung sowie im direkt gegenüberliegenden Bereich des Gurtquerschnittes jeweils eine der Trag- und Führungsrollen vorgesehen ist und die übrigen Trag- und Führungsrollen geneigt zu den beiden gegenüberliegenden Trag- und Führungsrollen angeordnet sind.

Die DE-A 31 45 899 offenbart eine röhrenförmige Bandstützeinrichtung für einen röhrenförmigen Bandförderer, bei welcher innerhalb von Stützrahmen, (Trag- und Führungsrollenstationen) fest damit verbunden, drehbare Stützrollen in einem bestimmten Abstand entlang des Bandes angeordnet sind, wobei jede Reihe von Stützrollen in Richtung des Bandumfanges genau über seinen Umfang abgestützt wird.

Eine ähnliche Einrichtung ist durch die DD-A 202124 bekannt, die eine Tragstruktur mit der geometrischen Form eines gestreckten Ellipsoids aufweist, das in seiner oberen und in seiner unteren Hälfte jeweils eine polygonale, vorzugsweise sechseckige Öffnung aufweist, durch welche das obere bzw. das untere Trum hindurchlaufen. An den sechs Kantenseitenabschnitten sind jeweils sechs Stützrollen angeordnet, die am Umfang des Schlauchbandes anliegen und dieses führen.

Darüberhinaus ist der DE-A 36 06 129 eine Schlauchband-Förderanlage zu entnehmen, wobei sich das Schlauchband ringsrum an Tragrollen abstützt, die in Form von Rollengirlanden angeordnet sind. Es sind zwei Rollengirlanden vorgesehen, von denen die eine etwa die untere Hälfte und die andere etwa die obere Hälfte des Schlauchbandquerschnittes umgreift. Die Rollengirlanden sind an vertikalen Schenkeln eines als Trag- und Führungsrollenstation ausgebildeten Tragrahmens gelenkig gelagert und die auf ihren Achsen drehbaren Rollen sind über Zwischenlager gelenkig miteinander verbunden.

Ferner offenbart die US-A 4526272 eine Aufhängung für Schlauchbandförderer zum Einsatz unter Tage. Das Schlauchband ist verfahrbar an einer Doppel-T-förmigen Fahrschiene über die Aufhängung angelenkt und wirkt mit dem Abgabeende einer Gewinnungsmaschine zusammen. Die Aufhängung ist dergestalt ausgebildet, daß sie sowohl das Leeraals auch das Volltrum gleichzeitig aufnimmt, wobei in keinem Fall die Gurtkanten einander überlappen. Die Aufhängung ist so ausgebildet, daß eine ständige Drehung in Umfangsrichtung erreichbar ist. Da aufgrund unterschiedlicher Beladezustände auch ständig verschiedene Zugkräfte sowohl im Leeraals auch im Volltrum vorliegen, kann nicht ausgeschlossen werden, daß der nicht geführte Gurt auf der Strecke umkippt und sich entleert.

Ein weiterer Schlauchbandförderer ist der JP-A 60-48 808 zu entnehmen. Dieser Schlauchbandförderer ist dergestalt ausgebildet bzw. entlang der Strecke führbar, daß die Trag- und Führungsrollen der zugehörigen Trag- und Führungsrollenstationen im Bereich einer horizontalen Kurve so in Richtung des Gurtquerschnittes zustellbar sind, daß das außerhalb der Kurve mit zylindrischem Gurtquerschnitt geführte Förderband eine vertikal-elliptische Form annimmt. In einer vertikalen Kurve werden die Trag- und Führungsrollen so in Richtung des Gurtquerschnittes zugestellt, daß der Fördergurt eine horizontal-elliptische Form annimmt. Innerhalb der Förderbänder sind üblicherweise sogenannte Zugträger angeordnet, die entweder durch Stahlseile oder Textileinlagen gebildet sein können. Im Hinblick auf diese Zugträger wird der Fördergurt in den jeweiligen Kurvenabschnitten der Strecke bestrebt sein, den kürzesten Weg zu wählen. Das heißt, bei Verwendung von Stahlseilen als Zugträger sowie Anordnung derselben in den beiden äußeren Randbereichen des flachen Fördergurtes werden die Zugträger bestrebt sein, den Fördergurt in Horizontalkurven in Umfangsrichtung zu drehen. Die in der JP-A 60-48 808 beschriebene zwangsweise herbeigeführte geometrische Form des Gurtquerschnittes wird sich somit im wesentlichen selbständig einstellen, wobei die dem jeweiligen Innenradius abgewandten Trag- und Führungsrollen lediglich eine stützende Funktion ausüben.

Schließlich ist der GB-A 2092977 noch eine Schlauchband-Förderanlage zu entnehmen, bei welcher ein zu einem zylindrischen Gurtquerschnitt geschlossenes Förderband durch eine Vielzahl entlang der Förderstrecke angeordnete, jeweils mit mehreren Trag- und Führungsrollen ausgerüsteten Trag- und Führungsrollenstationen hindurchführbar ist. Im Bereich mindestens einer der Trag- und Führungsrollenstationen ist eine zusätzliche Leitrolle vorgesehen, deren Anstellung um eine quer zur Laufrichtung verlaufende Horizontalachse veränderbar ist. Durch diese Maßnahme soll bewirkt werden, daß der Überlappungsbereich stets oben verbleibt und ein Verdrehen des geschlossenen Fördergurtes in Umfangsrichtung vermieden wird. Wie bereits angesprochen, handelt es sich bei Schlauchband-Förderanlagen um an sich flache Fördergurte, die mit Zugträgern versehen sind. Da insbesondere bei Verwendung von Stahlseilen als Zugträger diese bestrebt sind, den kürzesten Weg zu erzielen, ist auch hier ein Verdrehen des Gurtquerschnittes in Umfangsrichtung mit der Gefahr des Öffnens und Entleerens auf der Förderstrecke nicht auszuschließen.

Wie bei normalen Gurtförderanlagen gibt es auch bei den Förderern mit zu einem Schlauch geformtem Gurt die Möglichkeit, neben feststehenden Rollenstühlen Rollengirlanden zu verwenden. Einige Anordnungen sind vorab angeführt. Zwar besteht bei einem Rollgurt nicht die Gefahr eines seitlichen Auswanderns des Gurtes, doch muß eine Möglichkeit gefunden werden, einerseits ungewollte Verdrehungen des Schlauchbandes zu verhindern und andererseits bei gewollter Verdrehung des Schlauchbandes die Rollen so einzustellen, daß der Überlappungsbereich immer geschlossen ist. Außerdem muß das Anlaufen der Gurtkante an die Stirnseite der nächsten Rolle verhindert werden. Da das Verhalten des Schlauchbandes auf der Strecke, insbesondere im Hinblick auf ständig wechselnde Beladezustände sowie äußere Einflüsse (Regen, Schnee u.s.w.) nicht exakt vorausberechnet werden kann, sind die im St. d. T. vorgegebenen Lösungen nicht in der Lage, den vorab aufgestellten Forderungen Rechnung zu trage. Gerade die angesprochenen äußeren Umstände wie Regen, Schnee u.s.w. bewirken ein unkontrolliertes Verdrehen des Gurtes, insbesondere auf der geraden Strecke.

Der Erfindung liegt die Aufgabe zugrunde, eine Einrichtung gemäß dem gattungsbildenden Teil des ersten Patentanspruches dahingehend weiterzubilden, daß diese auf sämtliche Bedürfnisse des Schlauchbandes im Bereich der Streckenführung einstellbar ist. Aus Kostengründen soll angestrebt werden, die Aufhängung auf der gesamten Strecke gleich auszuführen und die verschiedenen benötigten Stellungen der Tragrollen in einer Konstruktion zu berücksichtigen. Insbesondere die problembehafteten geradlinig verlaufenden Bereiche der Streckenführung von Schlauchbandförderern sollen so gehandhabt werden können, daß der Gurt sich nur noch nach vorausberechenbaren Gesichtspunkten in Umfangsrichtung verdrehen kann.

Diese Aufgabe wird erfindungsgemäß dadurch gelöst, daß der Fördergurt in denjenigen Abschnitten der Förderstrecke, in denen er schlauchförmig geschlossen abläuft, einen durch entsprechende Einstellung der Trag- und Führungsrollen bewirkten ovalen Querschnitt aufweist, dergestalt, daß die Hauptachse des ovalen Gurtquerschnittes im wesentlichen horizontal verläuft und länger ist als seine Nebenachse, daß in allen Streckenabschnitten zumindest eine Trag- und Führungsrolle einer jeden Trag- und Führungsrollenstation auf den Bereich der Überlappung einstellbar ist und daß die geneigt angeordneten Trag- und Führungsrollen mit der Hauptachse einen spitzen Winkel bilden. Die erfindungsgemäße ovale Führung des Fördergurtes auf nahezu der gesamten Förderstrecke, insbesondere jedoch im Bereich der problembehafteten geradlinig verlaufenden Streckenabschnitte, dient dem Zweck der besseren Gurtführung (Zwangsführung) sowie der Vermeidung des ungewollten Verdrehens auf der Förderstrecke. Da bei der Auslegung von Schlauchband-Förderanlagen die Art des zu verwendenden Fördergurtes mit einfließt, können bereits vorab Studien über mögliche Auslenkungen des geschlossenen Fördergurtquerschnittes in Umfangsrichtung durchgeführt werden, um so für den Probelauf der Anlage dem Montagepersonal Richtlinien für die Voreinstellung an die Hand zu geben. Im Gegensatzzum St. d. T. wird durch die gezielt herbeigeführte ovale Streckenführung, insbesondere in den problembehafteten Streckenabschnitten, eine eindeutig vorgebbare Kontrolle über den Gurt erreicht.

Die erfindungsgemäße Ausführung ist sowohl für Tragrollen in fester Ausführung als auch für Tragrollenstühle mit Rollengirlanden einsetzbar. Einem weiteren Gedanken der Erfindung gemäß ist die Hauptachse des ovalen Gurtquerschnittes 10 bis 50%, vorzugsweise jedoch 15 bis 25%, länger als seine Nebenachse. Die jeweils zu wählenden Verhältnisse bleiben dem entsprechenden Anwendungsfall bzw. seiner konstruktiven Ausgestaltung überlassen. Weiterhin wird vorgeschlagen, daß die Trag- und Führungsrollen, in Form von Tragrollengirlanden zusammengefaßt, unmittelbar mit der jeweiligen als Rahmen ausgebildeten Trag- und Führungsrollenstation zusammenwirken, wobei jeweils eine Tragrollengirlande das Schlauchband oben sowie unten abstützt. Alternativ dazu wird vorgeschlagen, daß die Trag- und Führungsrollen, das Schlauchband oben sowie unten über einstellbare Halterungen stützend, fest mit dem Rahmen bzw. Bauteilen desselben verbunden sind. Eine weitere Ausgestaltung der Erfindung sieht vor, daß die Trag- und Führungsrollen in fester oder girlandenförmiger Ausführung innerhalb einer mit dem Rahmen lösbar verbundenen und auf einer Kreisbahn um die Längsachse verdrehbaren Aufnahmeeinrichtung gelagert sind. Die angesprochenen Aufnahmeeinrichtungen sind den jeweiligen Rahmen anzupassen, wobei in letzterem Fall eine Verdrehung der Aufnahmeeinrichtung gegenüber dem Rahmen in Umfangsrichtung gegeben ist, damit bei der Ausrichtung bzw. Einstellung der Tragrollen gewährleistet werden kann, daß entlang der Strecke die Gurtüberlappung ständig durch eine Tragrolle abgedeckt wird. Durch diese Maßnahme wird einerseits sichergestellt, daß der Gurt sich nicht ungewollt auf der Strecke öffnen kann und andererseits eine Verdrehung in Umfangsrichtung gezielt gesteuert werden kann.

Wird für eine Schlauchband-Förderanlage eine Tragund Führungsrollenstation mit einer verdrehbaren Aufnahmeeinrichtung gewünscht, so bestehen folgende Möglichkeiten der konstruktiven Ausgestaltung dieser Aufnahmeeinrichtung :

- Die Aufnahmeeinrichtung kann aus einem geschlossenen Ring gebildet sein,
- die Aufnahmeeinrichtung kann aus einer kreisringförmigen Scheibe gebildet sein,
– die Aufnahmeeinrichtung kann aus einer Sichel bestehen, die ggf. mittels weiterer Bauteile verschließbar ist.

Alle genannten konstruktiven Ausgestaltungen sind gegenüber der sie aufnehmenden Trag- und Führungsrollenstation in Umfangsrichtung verdrehbar, wobei die jeweilige Aufnahmeeinrichtung mittels Klemmelementen am Rahmen befestigbar ist.

Die jeweilige Aufnahmeeinrichtung kann als Massenprodukt hergestellt werden, wobei die Tragrollen in fester oder girlandenförmiger Ausführung unmittelbar daran befestigt werden können. Da keine starre sondern eine lösbare Verbindung zwischen Rahmen und Aufnahmeeinrichtung gegeben ist, kann auf der Baustelle durch einfaches Lösen der Klemmverbindung die grobe Vorabeinstellung nach einem Probelauf des Schlauchbandes korrigiert werden. Die Tragrollen selber müssen zu diesem Zweck nicht in Umfangsrichtung verändert werden. Wie dargelegt, können die Aufnahmeeinrichtungen sowohl eine geschlossene Gestalt aufweisen als auch einen offenen Querschnitt besitzen, der mittels weiterer Bauteile wieder verschließbar ist. Auch diese Maßnahme ist der jeweiligen auszuführenden Anlage anzupassen, wobei bei der verschließbaren Aufnahmeeinrichtung ermöglicht wird, daß bei Beschädigungen am Band dieses in den beschädigten Bereichen aus den jeweiligen Aufnahmeeinrichtungen herausgenommen und repariert werden kann. Aus konstruktiven und räumlichen Gründen werden die feststehenden Trag- und Führungsrollen alternierend auf beiden Seiten der jeweiligen Aufnahmeeinrichtung angeordnet.

Einem weiteren Gedanken der Erfindung gemäß wird vorgeschlagen, daß die Endpunkte der Tragrollenachsen bzw. der sie aufnehmenden Halterungen radial verstellbar fixiert sind. Diese Maßnahme dient dem Zweck, die ansonsten feststehenden Tragrollen radial in Richtung des Gurtes zuzustellen, wobei durch unterschiedliche Zustellung die Ovalität des Gurtbandes beeinflußt werden kann. Hier bieten sich eine Reihe von Lösungsmöglichkeiten an. Vorzugsweise werden die feststehenden Tragrollen bzw. die sie aufnehmenden Halterungen in radial verlaufenden Langlöchern geführt, die im Bereich der jeweiligen Aufnahmeeinrichtung angeordnet sind. Alternativ besteht die Möglichkeit, mehrere Einzelbohrungen in radialer Richtung hintereinander anzuordnen. Auch automatische Zustellmöglichkeiten in Form von Spindeln oder dgl. sind denkbar.

Sollen anstelle fester Tragrollen Rollengirlanden zum Einsatz kommen, die entweder unmittelbar am Rahmen befestigt oder aber innerhalb der zugehörigen Aufnahmeeinrichtung angeordnet sind, so wird weiterhin vorgeschlagen, daß die Befestigungspunkte der Rollengirlandenenden jeweils auf der geradlinigen Verlängerung der jeweiligen Hauptachse des ovalen Fördergurtquerschnittes angeordnet sind. Weiterhin wird vorgeschlagen, daß der Abstand der Befestigungspunkte der Rollengirlandenenden 60 bis 80% der Girlandenlänge beträgt, vorzugsweise 65 bis 75%. Alternativ dazu wird vorgeschlagen, daß die Befestigungspunkte der Rollengirlandenenden parallel zur oder entlang der Hauptachse des ovalen Fördergurtquerschnittes verschiebbar sind. Durch diese Maßnahme wird die Ovalität des Fördergurtquerschnittes beeinflußt. Durch Dehnen oder Strecken der jeweiligen oberen und-/oder unteren Rollengirlande kann die Ovalität in der gewünschten Form beeinflußt werden. Ferner denkbar ist, daß zwischen den Rollengirlandenenden und ihren Befestigungspunkten elastisch nachgiebige Federelemente eingefügt sind. Infolge einer vorgebbaren Federspannung können die Rollengirlanden bei eventueller Überbeladung des Gurtquerschnittes elastisch ausweichen, ohne Beschädigungen an den Girlanden bzw. am Gurt hervorzurufen. Weiterhin denkbar ist, daß die Befestigungspunkte der Rollengirlandenenden vertikal verschiebbar sind. Auch durch diese Maßnahme besteht die Möglichkeit, den Gurtquerschnitt, vorzugsweise bei Kurvenfahrt, zu beeinflussen.

Um den Rollengirlanden längs und quer zum Schlauchband Pendelfreiheit zu gewähren, ist in deren Endbereichen jeweils ein kardanisches Gelenk vorgesehen. Durch die Verwendung der bereits angesprochenen längenveränderlichen Einrichtung zwischen dem Rahmen bzw. der Aufnahmeeinrichtung und dem kardanischen Gelenk kann der Aufhängepunkt der Rollengirlanden ebenfalls quer zum Schlauchband eingestellt werden, wodurch bei Bedarf jede Form der Ovalität bis hin zur klassischen Ellipse erreicht werden kann. Als längenveränderliche Einrichtung kann bevorzugt eine Schraube zur Anwendung kommen, deren Kopf den inneren Anschlag für das kardanische Gelenk bildet. Durch Verstellen der Schraube kann jede beliebige Ovalität bis hin zur Ellipse eingestellt werden.

Durch die erfindungsgemäßen Merkmale wird insbesondere eine Aufhängung für Schlauchbandförderer geschaffen, die allen nur denkbaren Anforderungen im Hinblick auf Ein- bzw. Verstellung in Längs-, Quer- und Umfangsrichtung gerecht wird. Sie zeichnet sich insbesondere durch problemlose und schnelle Nachstellung bei nicht exakter Voreinstellung aus.

Die Erfindung ist in der Zeichnung dargestellt und wird nachstehend beschrieben. Es zeigen :

Fig. 1 : Portalartiger Rahmen als Trag- und Führungsrollenstation mit unmittelbarer Anlenkung der Tragrollengirlanden zur ovalen Gurtführung
Fig. 2 : Portalartiger Rahmen als Trag- und Führungsrollenstation mit feststehenden Tragrollen zur ovalen Gurtführung
Fig. 3 u. 4 : Portalartiger Rahmen als Trag- und Führungsrollenstation mit sichelförmiger Aufnahmeeinrichtung für Tragrollengirlanden in verschiedenen Ansichten

Fig. 5 : Alternative Ausgestaltung einer Aufhängung für Schlauchbandförderer in schematischer Darstellung

Fig. 6 u. 7 : Vergrößerte Darstellung eines kardanischen Gelenkbereiches

Fig. 8 u. 9 : Verschiedene Ansichten eines als Trag- und Führungsrollenstation ausgebildeten Rahmens mit kreisförmig gestalteter Aufnahmeeinrichtung

Fig. 10 : Gurtführung auf der Strecke unter Anwendung der Aufnahmeeinrichtung gemäß Fig. 8 u. 9

Fig. 11 : Einrichtung zum Führen schlauchförmiger Förderbänder mit geschlossener Aufnahmeeinrichtung

Fig. 12 : Einrichtung zum Führen von schlauchförmigen Förderbändern mit partiell geschlitzter Aufnahmeeinrichtung

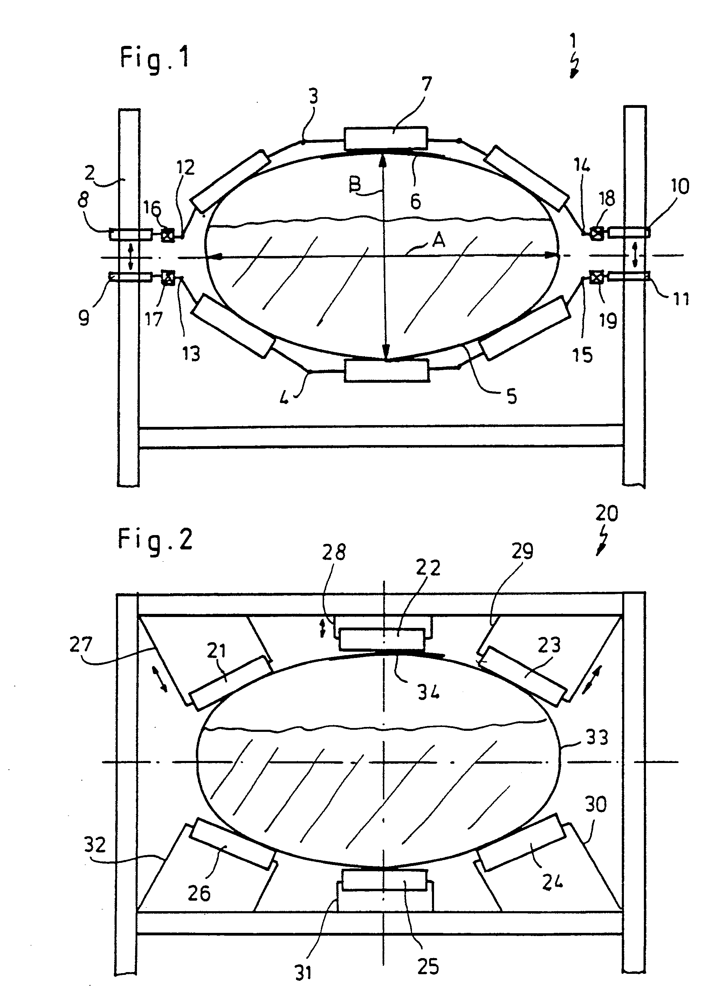

Fig. 1 zeigt in schematischer Darstellung eine Schlauchband-Förderanlage 1, die entlang der Strecke eine Vielzahl von Trag-und Führungsrollenstationen 2 in Form von portalartig ausgebildeter Rahmen aufweist. Innerhalb des portalartigen Rahmens 2 sind zwei Rollengirlanden 3, 4 angeordnet, die einen Fördergurt 5 in ovaler Form dergestalt führen, daß sein Überlappungsbereich 6 stets geschlossen von einer Tragrolle 7 abgedeckt wird. Die Ovalität des Fördergurtes 5 wird bestimmt durch seine Hauptachse A sowie seine Nebenachse B. Die Rollengirlanden 3 u. 4 enden jeweils in Befestigungspunkten 8, 9, 10, 11, wobei zwischen den Rollengirlandenenden 12, 13, 14, 15 und den Befestigungspunkten 8, 9, 10, 11 elastisch nachgiebige Federelemente 16, 17, 18, 19 eigefügt sind. Die Befestigungspunkte 8, 9, 10, 11 sind in vertikaler Richtung verschiebbar ausgebildet. Die Ovalität des Fördergurtes 5 kann sowohl durch Verschieben der Befestigungspunkte 8, 9, 10, 11 in vertikaler Richtung als auch durch Dehnen oder Strecken der Rollengirlanden 3, 4 entweder entlang der Hauptachse A oder parallel dazu verändert werden. Infolge der ovalen Gurtführung wird sichergestellt, daß zum einen der Überlappungsbereich 6 ständig von einer Tragrolle 7 abgedeckt wird und andererseits der Gurtquerschnitt ständig in dieser Form entlang der Strecke geführt werden kann, ohne daß die Gefahr besteht, daß sich der Fördergurt 5 öffnet und sich auf der Strecke entleert.

Fig. 2 zeigt eine weitere Schlauchband-Förderanlage 20. Anstelle der Rollengirlanden gemäß Fig. 1 werden hier feststehende Tragrollen 21, 22, 23, 24, 25, 26 verwendet, die in entsprechenden Halterungen 27, 28, 29, 30, 31, 32 gehalten sind. Zum Zwecke der Einstellung sind die Tragrollen 21, 22, 23, 24, 25, 26 innerhalb der Halterungen 27-32 radial in Richtung des Fördergurtes 33 verstellbar. Durch Verstellen einzelner oder aller Tragrollen 21, 22, 23, 24, 25, 26 kann auch hier jede Ovalität des Fördergurtes 33 erzielt werden. Der Überlappungsbereich 34 wird analog zu Fig. 1 ebenfalls ständig durch eine Tragrolle 22 abgedeckt.

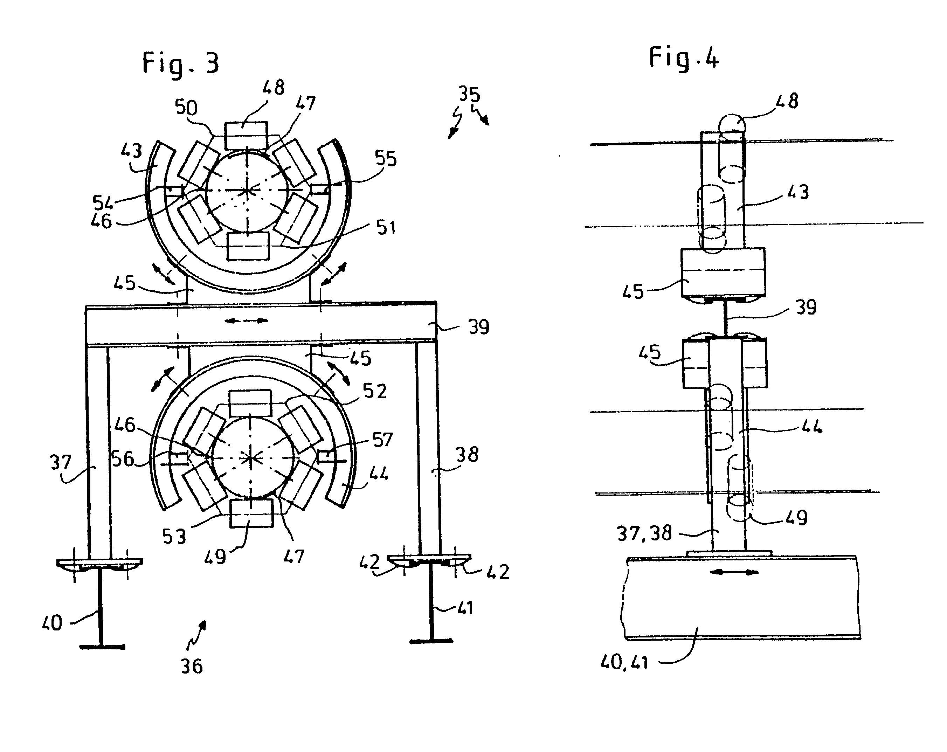

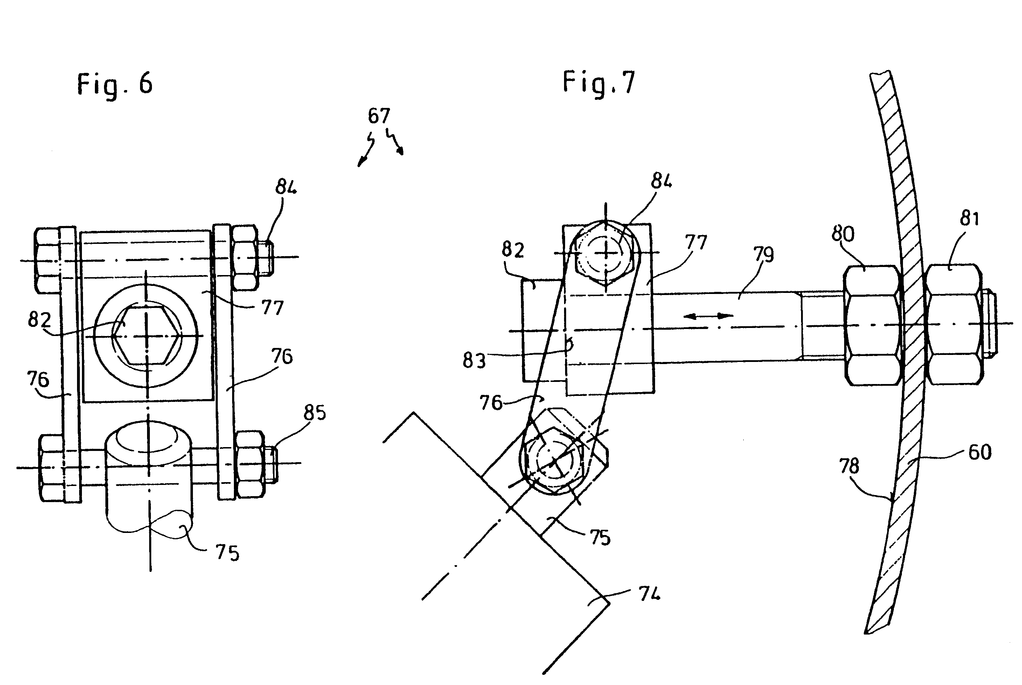

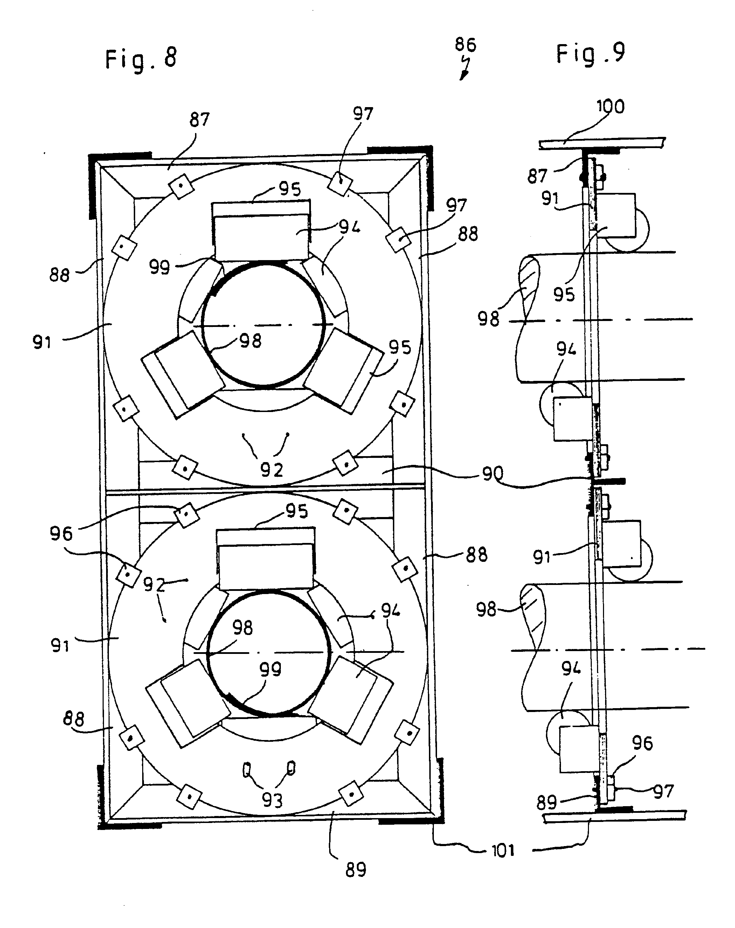

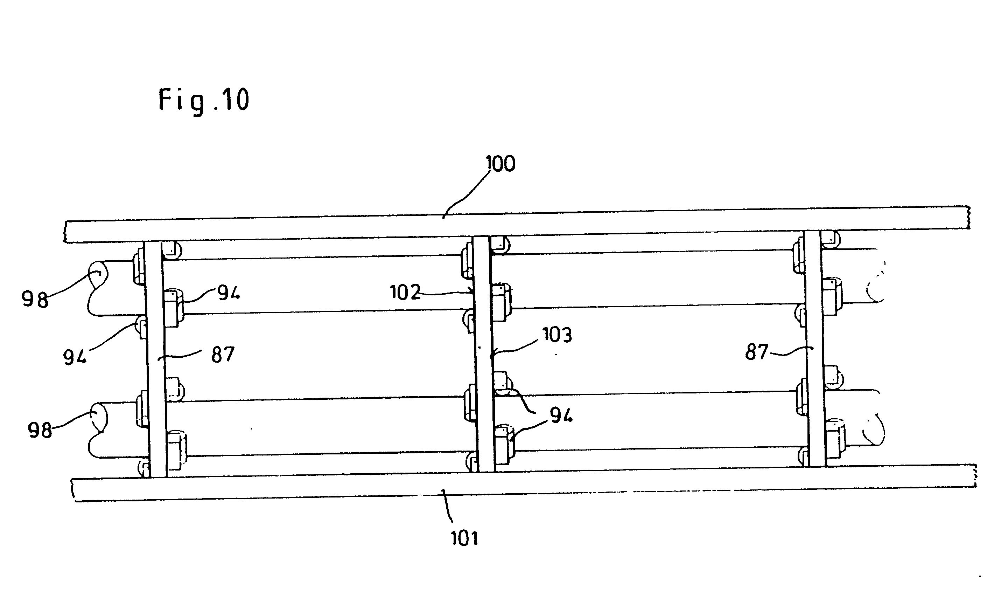

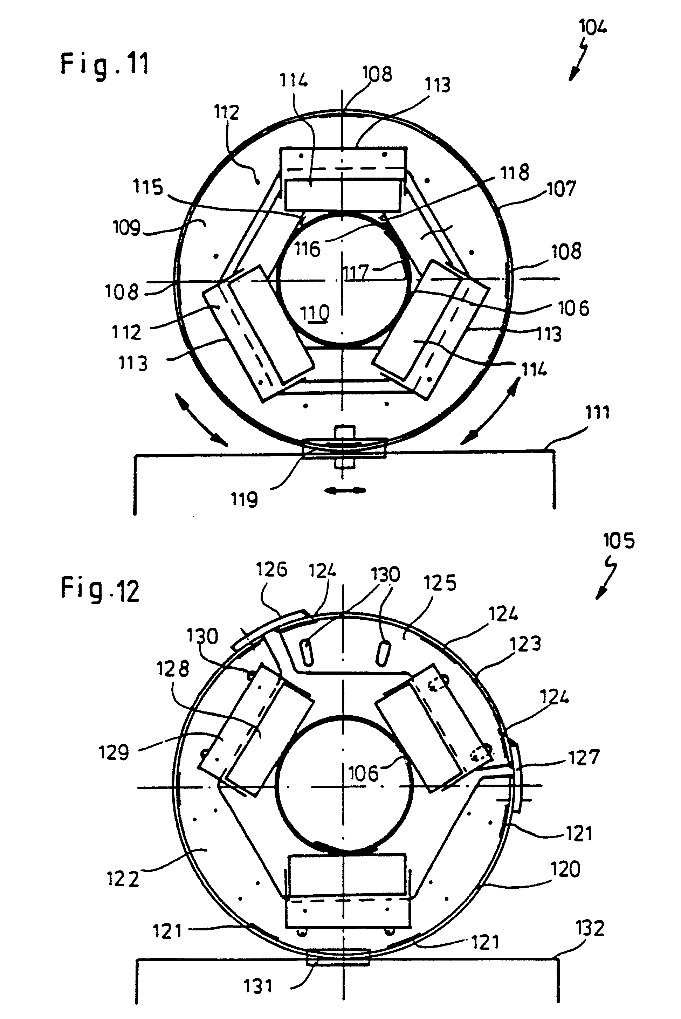

Die Fig. 3 u. 4 zeigen ebenfalls eine Schlauchband-Förderanlage 35. Dargestellt ist eine Trag- und Führungsrollenstation 36 in Form eines portalartig ausgebildeten Rahmens, dessen Vertikalstützen 37, 38 durch einen Horizontalschenkel 39 miteinander verbunden sind. Die Vertikalstützen 37, 38 sind auf einem Doppel-T-förmigen, im Erdbereich eingelassenen Unterteil 40, 41 mittels Klemmplatten 42 befestigt, wobei eine Verschiebung des Rahmens 36 in Längsrichtung der Unterkonstruktion 40, 41 gewährleistet ist (Pfeilrichtung). Ober- und unterhalb des Horizontalschenkels 39 sind sogenannte Aufnahmeeinrichtungen 43, 44 in Form einer Sichel vorgesehen. Über Halterungen 45 sind die Aufnahmeeinrichtungen 43, 44 am Horizontalschenkel 39 ebenfalls über nicht weiter dargestellte Klemmplatten verlagert. Die Aufnahmeeinrichtungen 43, 44 sind im Querschnitt, wie bereits angesprochen, sichelförmig ausgebildet, wodurch ein Herausnehmen des Fördergurtes 46 nach oben bzw. nach unten ermöglicht wird. Damit der Überlappungsbereich 47 des Fördergurtes 46 an jedem beliebigen Ort der Streckenführung immer von einer Tragrolle 48, 49 abgedeckt ist, ist die Sichel 43, 44 gegenüber dem Rahmen 36 bzw. dessen Horizontalschenkel 39 auf einer Kreisbahn (Pfeilrichtung) um die Längsachse verdrehbar. Der Fördergurt 46 selber wird mittels jeweils zweier Rollengirlanden 50, 51, 52, 53 geführt. In den Endbereichen der Rollengirlanden 50, 51, 52, 53 ist jeweils ein kardanisches Gelenk 54, 55, 56, 57 vorgesehen, welches in den Fig. 6 u. 7 näher beschrieben wird. Durch die Veränderungen des lichten Abstandes zwischen den kardanischen Gelenken 54, 55, 56, 57 (Pfeilrichtung) ist die bewußte Formung des Fördergurtes 46 in eine ovale Form möglich.

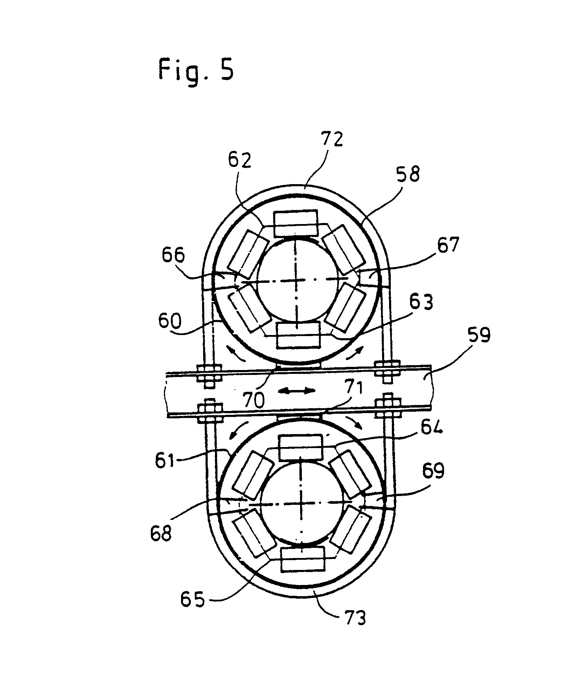

Fig. 5 zeigt eine alternative Ausbildung einer Aufhängung für Schlauchbandförderer in schematischer Darstellung. Der Fördergurt 58 wird, wie bereits vorab in den Fig. 3 u. 4 dargestellt, ober- und unterhalb des Horizontalschenkels 59 des nur angedeuteten Rahmens dergestalt geführt, daß kurze Rohrabschnitte 60, 61 vorgesehen sind, innerhalb derer die Rollengirlanden 62, 63, 64, 65 gelenkig aufgehängt sind. Auch hier ist analog zu den Fig. 3 u. 4 ein nur angedeutetes kardanisches Gelenk 66, 67, 68, 69 vorgesehen. Das jeweilige Rohr 60, 61 stützt sich über ein Formteil 70, 71 am Horizontalschenkel 59 ab und wird jeweils von einem Bügel 72, 73 umschlossen, der wiederum am Horizontalschenkel 59 verschiebbar befestigt ist. Die Verdrehung der Rohre 60, 61 erfolgt somit innerhalb der Bügel 72, 73, wobei auch hier nicht weiter dargestellte Befestigungselemente vorgesehen sind.

Die Fig. 6 u. 7 zeigen vergrößerte Darstellungen eines kardanischen Gelenkbereiches 67 (Fig. 5). Die letzte Tragrolle 74 der jeweiligen Rollengirlande ist im Bereich ihrer Achse 75 mittels Kettengliedern 76 an einem kardanischen Gelenk 77 angelenkt. Zwischen dem Gelenk 77 und der Wand 78 des Rohres 60 erstreckt sich eine in ihrer Länge innerhalb des Rohres 60 veränderbare Schraube 79, die innerhalb und außerhalb des Rohres 60 durch Muttern 80, 81 fixiert wird. Der Schraubenkopf 82 dient als innerer Anschlag 83 für das Gelenk 77. Durch Längenänderung der Schraube 79 kann eine entsprechende Ovalität des Fördergurtes (nicht dargestellt) erreicht werden, die für Kurvenführungen und Geradeauslauf sinnvoll ist. Die Kettenglieder 76 sind ebenfalls mittels Schrauben 84, 85 an der Achse bzw. dem Gelenk 79 befestigt.

Die Fig. 8 u. 9 zeigen verschiedene Ansichten eines Schlauchbandförderers 86. Dargestellt ist eine als Rahmen ausgebildete Trag- und Führungsrollenstation, die aus mehreren Winkelprofilen 87, 88, 89, 90 zusammengesetzt ist. Die als kreisringförmige Scheibe ausgebildete Aufnahmeeinrichtung 91 ist stirnseitig mit mehreren am Umfang gleichmäßig verteilten Bohrungen 92 versehen. Angedeutet sind in Fig. 8 auch Langlöcher 93, falls eine Verstellmöglichkeit der Tragrollen 94 bzw. der sie aufnehmenden im Querschnitt etwa U-förmigen Bügel 95 gewünscht wird. Die Scheibe 91 wird mittels Klemmplatten 96 lösbar mit den Winkelprofilen 87, 88, 89, 90 verbunden. Durch Lösen der Befestigungselemente 97 kann die mit den Tragrollen 94 fest verbundene Scheibe 91 in Umfangsrichtung und begrenzt auch seitlich sowie nach oben und unten bewegt werden. Durch diese Maßnahme soll sichergestellt werden, daß der Fördergurt 98 bzw. der Überlappungsbereich 99 auf der Strecke ständig von einer Tragrolle 94 geschlossen gehalten wird.

Fig. 10 offenbart eine Gurtführung auf der Strecke unter Anwendung der Aufnahmeeinrichtung gemäß den Fig. 8 u. 9. Dargestellt sind Längsträger 100, 101 vorgegebener Länge, z. B. 10 m, zwischen denen die Rahmen 87 bis 90 befestigt sind, das Ober- und das Untertrum des Fördergurtes 98 sowie die an den Scheiben (nicht dargestellt) befestigten Tragrollen 94, die alternierend an beiden Stirnseiten 102, 103 der Scheibe bzw. des Rahmens 87 bis 90 befestigt sind.

Die Fig. 11 u. 12 zeigen jeweils eine Einrichtung 104, 105 zum Führen von schlauchförmigen Fördergurten 106, die im wesentlichen folgende Bauteile beinhalten :

In Fig. 11 ist eine Einrichtung 104 dargestellt, die aus einem geschlossenen Ring 107 besteht, der durch Schweißen 108 oder dgl. fest mit einem ebenfalls geschlossenen etwa kreisringförmigen Bauteil 109 verbunden ist. Der Fördergurt 106 wird durch die Öffnung 110 im Bauteil 109 hindurchgezogen und im Bereich des Untertrums durch ein weiteres mit dem Rahmen 111 verbundenes Aufnahmeelement zurückgeführt (nicht dargestellt). Im Bauteil 109 sind, in Umfangsrichtung gesehen, mehrere Bohrungen 112 eingebracht, die zur Befestigung von in Bügeln 113 gehaltenen Tragrollen 114 dienen. Die Bohrungen 112 sind am Umfang des Bauteils 109 dergestalt angeordnet, daß die Tragrollen 114 am Umfang 115 des Fördergurtes 106 unter vorgegebener Vorspannung anliegen. Die beiden Gurtkanten 116, 117 sind einander überlappend ausgebildet und liegen in jeder Aufnahmeeinrichtung 104 an der Umfangsfläche 118 einer Tragrolle 114 an. Die Aufnahmeeinrichtung 104 wirkt dergestalt mit dem Rahmen 111 zusammen, daß sie über Klemmplatten 119 oder dgl. Befestigungelemente lösbar mit dem Rahmen 111 verbunden wird. Die Pfeile zeigen die möglichen Freiheitsgrade zum Zwecke der Vorabeinstellung bzw. der Korrektur.

Fig. 12 ist im wesentlichen analog zu Fig. 11 zu sehen, mit dem Unterschied, daß die Aufnahmeeinrichtung 105 partiell geteilt ist. Es wird somit ein geschlitzter Zylinder 120 gebildet, der durch Schweißen 121 mit einem Segment 122 verbunden ist. Der Schlitz ist mittels eines dem Radius des Zylinders 20 entsprechenden Deckels 123 verschließbar, der mit einem weiteren Segment 124 durch Schweißen 125 fest verbunden ist. Über am Deckel 125 angeschweißte Platten 126, 127 wird mittels nur angedeuteter Schrauben eine lösbare Verbindung mit dem Zylinder 120 hergestellt. Die der Übersicht halber nur einseitig dargestellten Tragrollen 128 sind analog zu Fig. 11 ebenfalls in Bügeln 129 gehalten, die wiederum mittels Verbindungselementen mit den Segmenten 122, 125 verbunden sind. Um hier eine Anpassung an Gurtformen (z.B. Ovalität) zu erzielen, sind Langlöcher 130 vorgesehen. Auch hier ist die Aufnahmeeinrichtung 105 mittels Klemmplatten 131 oder dgl. lösbar mit dem Rahmen 132 verbunden.

## Ansprüche

1. Schlauchband-Förderanlage, in der ein Fördergurt (5, 33, 46, 98, 106) in geradlinig und kurvenförmig verlaufenden Streckenabschnitten, teils in flach ausgebreiteter oder gemuldeter Form und teils in Form einer durch stetige Krümmung in Querrichtung und Überlappung (6, 34, 47, 99, 116, 117) der Gurtlängsränder gebildeten kreisförmigen oder im Kurvenbereich ovalen Schlauches über mit einer Vielzahl von entlang der Strecke angeordneten Trag- und Führungsrollenstationen (2, 36, 87-90, 111, 112) zusammenwirkenden Trag-, Führungs- und Antriebsrollen (7, 21-26, 48, 49, 74, 94, 114, 128) abläuft, wobei im Bereich der Überlappung (6, 34, 47, 99, 116, 117) sowie im direkt gegenüberliegenden Bereich des Gurtquerschnittes jeweils eine der Trag- und Führungsrollen (7, 22, 25, 48, 49, 94, 114) vorgesehen ist und die übrigen Trag- und Führungsrollen (21, 23, 24, 26, 74, 94, 114, 128) geneigt zu den beiden gegenüberliegenden Trag- und Führungsrollen angeordnet sind, dadurch gekennzeichnet, daß der Fördergurt (5, 37, 46, 98, 106) in denjenigen Abschnitten der Förderstrecke, in denen er schlauchförmig geschlossen abläuft, einen durch entsprechende Einstellung der Trag- und Führungsrollen (7, 21-26, 48, 49, 74, 94, 114, 128) bewirkten ovalen Querschnitt aufweist, dergestalt, daß die Hauptachse (A) des ovalen Gurtquerschnittes im wesentlichen horizontal verläuft und länger ist als seine Nebenachse (B), daß in allen Streckenabschnitten zumindest eine Trag- und Führungsrolle (7, 22, 48, 49, 94, 114) einer jeden Trag- und Führungsrollenstation (2, 36, 87-90, 111, 132) auf den Bereich der Überlappung (6, 34, 47, 99, 116, 117) einstellbar ist und daß die geneigt angeordneten Trag- und Führungsrollen (21, 23, 24, 26, 74, 94, 114, 128) mit der Hauptachse (A) einen spitzen Winkel bilden.

2. Schlauchband-Förderanlage nach Anspruch 1, dadurch gekennzeichnet, daß die Hauptachse (A) des ovalen Gurtquerschnittes 10 bis 50% länger ist als seine Nebenachse (B).

3. Schlauchband-Förderanlage nach Anspruch 1 oder 2, dadurch gekennzeichnet, daß die Hauptachse (A) des ovalen Gurtquerschnittes 15 bis 25% länger ist als seine Nebenachse (B).

4. Schlauchband-Förderanlage nach den Ansprüchen 1 bis 3, dadurch gekennzeichnet, daß die Trag- und Führungsrollen (7) in Form von Tragrollengirlanden (3, 4) zusammengefaßt, unmittelbar mit den als Rahmen (2) ausgebildeten Trag- und Führungsrollenstationen zusammenwirken, wobei jeweils eine Tragrollengirlande (3, 4) das Schlauchband (5) oben sowie unten abstützt.

5. Schlauchband-Förderanlage nach den Ansprüchen 1 bis 3, dadurch gekennzeichnet, daß die Trag- und Führungsrollen (22-26), das Schlauchband (33) oben sowie unten über einstellbare Halterungen (27-32) stützend, fest mit den als Rahmen (20) ausgebildeten Trag- und Führungsrollenstationen bzw. Bauteilen derselben verbunden sind.

6. Schlauchband-Förderanlage nach den Ansprüchen 1 bis 3 dadurch gekennzeichnet, daß die Trag- und Führungsrollen (48, 49, 74, 94, 114, 128) in fester oder girlandenförmiger Ausführung innerhalb einer mit den als Rahmen ausgebildeten Trag- und Führungsrollenstationen (36, 87-90, 111, 132) lösbar verbunden und auf einer Kreisbahn um die Längsachse verdrehbaren Aufnahmeeinrichtung (43, 44, 60, 61, 91, 104, 105) gelagert sind.

7. Schlauchband-Förderanlage nach Anspruch 6, dadurch gekennzeichnet, daß die Aufnahmeeinrichtung (104) aus einem geschlossenen Ring (107) gebildet ist.

8. Schlauchband-Förderanlage nach Anspruch 6, dadurch gekennzeichnet, daß die Aufnahmeeinrichtung aus einer kreisringförmigen Scheibe (91) gebildet ist.

9. Schlauchband-Förderanlage nach Anspruch 6, dadurch gekennzeichnet, daß die Aufnahmeeinrichtung aus einer Sichel (43, 44, 120) besteht, die ggf. mittels weiterer Bauteile (125) verschließbar ist.

10. Schlauchband-Förderanlage nach den Ansprüchen 6 bis 9, dadurch gekennzeichnet, daß die Aufnahmeeinrichtung (43, 44, 60, 61, 91, 104, 105) mittels Klemmelementen (96, 119, 131) am Rahmen (36, 87-90, 111, 132) befestigbar und zu Einstellzwecken der Trag- und Führungsrollen (48, 49, 94, 114, 128) in Umfangsrichtung verdrehbar ist.

11. Schlauchband-Förderanlage nach den Ansprüchen 6 bis 10, dadurch gekennzeichnet, daß die feststehenden Trag- und Führungsrollen (94, 114, 128) alternierend auf beiden Seiten der jeweiligen Aufnahmeeinrichtung (91, 104, 105) angeordnet sind.

12. Schlauchband-Förderanlage nach den Ansprüchen 6 bis 11, dadurch gekennzeichnet, daß die Endpunkte der Tragrollenachsen bzw. der sie aufnehmenden Halterungen (95, 113, 129) radial verstellbar fixiert sind.

13. Schlauchband-Förderanlage nach den Ansprüchen 6 bis 12, dadurch gekennzeichnet, daß die feststehenden Tragrollen (94, 114, 128) bzw. die sie aufnehmenden Halterungen (95, 113, 129) in radial verlaufenden Langlöchern (93, 130) geführt, mit der jeweiligen Aufnahmeeinrichtung (91, 104, 105) verbunden sind.

14. Schlauchband-Förderanlage nach den Ansprüchen 1 bis 10, dadurch gekennzeichnet, daß die Befestigungspunkte (8, 9, 10, 11) der Rollengirlandenenden (3, 4) jeweils etwa auf der geradlinigen Verlängerung der jeweiligen Hauptachse (A) des ovalen Fördergurtquerschnittes angeordnet sind.

15. Schlauchband-Förderanlage nach Anspruch 14, dadurch gekennzeichnet, daß der Abstand der Befestigungspunkte (8, 9, 10, 11) der Rollengirlandenenden (12, 13, 14, 15) 60 bis 80% der Girlandenlänge beträgt.

16. Schlauchband-Förderanlage nach den Ansprüchen 14 und 15, dadurch gekennzeichnet, daß der Abstand der Befestigungspunkte (8, 9, 10, 11) der Rollengirlandenenden (12, 13, 14, 15) 65 bis 75% der Girlandenlänge beträgt.

17. Schlauchband-Förderanlage nach einem der Ansprüche 14 bis 16, dadurch gekennzeichnet, daß die Befestigungspunkte (8, 9, 10, 11) der Rollengirlandenenden (12, 13, 14, 15) parallel zur oder entlang der Hauptachse (A) des ovalen Fördergurtquerschnittes verschiebbar sind.

18. Schlauchband-Förderanlage nach einem der Ansprüche 14 bis 17, dadurch gekennzeichnet, daß zwischen den Rollengirlandenenden (12, 13, 14, 15) und ihren Befestigungspunkten (8, 9, 10, 11) elastisch nachgiebige Federelemente (16, 17, 18, 19) eingefügt sind.

19. Schlauchband-Förderanlage nach einem der Ansprüche 14 bis 18, dadurch gekennzeichnet, daß die Befestigungspunkte (8, 9, 10, 11) der Rollengirlandenenden (12, 13, 14, 15) vertikal verschiebbar sind.

## Claims

1. Closed belt conveyor system, in which a conveyor belt (5, 33, 46, 98, 106) runs in straight and curved sections of the run, partly in a flat spread out or troughed form and partly in the shape of a circular or, in the region of the curves, an oval tube formed by constant curvature in a transverse direction and overlapping (6, 34, 47, 99, 116, 117) of the longitudinal edges of the belt, by way of carrying, guiding and driving rollers (7, 21-26, 48, 49, 74, 94, 114, 128) co-operating with a plurality of carrying and guiding roller stations (2, 36, 87-90, 111, 112) arranged along the run, one of the carrying and guiding rollers (7, 22, 25, 48, 49, 94, 114) being provided in each case in the region of the overlap (6, 34, 47, 99, 116, 117) and in the directly opposed region of the belt cross-section, and the remaining carrying and guiding rollers (21, 23, 24, 26, 74, 94, 114, 128) being inclined with respect to the two opposed carrying and guiding rollers, characterised in that the conveyor belt (5, 37, 46, 98, 106) in those sections of the conveyor run in which it is closed in a tubular shape has an oval cross-section, produced by corresponding setting of the carrying and guiding rollers (7, 21-26, 48, 49, 74, 94, 114, 128), such that the major axis (A) of the oval belt cross-section runs substantially horizontally and is longer than its minor axis (B), that in all sections of the run at least one carrying and guiding roller (7, 22, 48, 49, 94, 114) of each carrying and guiding roller station (2, 36, 87-90, 111, 132) can be set onto the region of the overlap (6, 34, 47, 99, 116, 117) and that the inclined carrying and guiding rollers (21, 23, 24, 26, 74, 94, 114, 128) form an acute angle with the major axis (A).

2. Closed belt conveyor system according to Claim 1, characterised in that the major axis (A) of the oval belt cross-section is from 10 to 50% longer than its minor axis (B).

3. Closed belt conveyor system according to Claim 1 or 2, characterised in that the major axis (A) of the oval belt cross-section is from 15 to 25% longer than its minor axis (B).

4. Closed belt conveyor system according to Claims 1 to 3, characterised in that the carrying and guiding rollers (7) are assembled in the form of carrying roller garlands (3, 4) and co-operate directly with the carrying and guiding roller stations in the form of frames (2), a carrying roller garland (3, 4) in each case bearing against the closed belt (5) both above and below.

5. Closed belt conveyor system according to Claims 1 to 3, characterised in that the carrying and guiding rollers (22-26), supporting the closed belt (33) above and below by way of adjustable retaining means (27-32), are fixedly connected to the carrying and guiding roller stations, in the form of frames (20), or to components thereof.

6. Closed belt conveyor system according to Claims 1 to 3, characterised in that the carrying and guiding rollers (48, 49, 74, 94, 114, 128) in fixed or garland form are supported within a receiving device (43, 44, 60, 61, 91, 104, 105) which is detachably connected to the carrying and guiding roller stations (36, 87-90, 111, 132) in the form of frames and which is rotatable on a circular path about the longitudinal axis.

7. Closed belt conveyor system according to Claim 6, characterised in that the receiving device (104) is formed by a closed ring (107).

8. Closed belt conveyor system according to Claim 6, characterised in that the receiving device is formed by a circular ring-shaped disc (91).

9. Closed belt conveyor system according to Claim 6, characterised in that the receiving device consists of a crescent-shape (43, 44, 120) which can optionally be closed by means of further components (125).

10. Closed belt conveyor system according to Claims 6 to 9, characterised in that the receiving device (43, 44, 60, 61, 91, 104, 105) can be fastened by means of clamping elements (96, 119, 131) to the frame (36, 87-90, 111, 132) and for the purpose of setting the carrying and guiding rollers (48, 49, 94, 114, 128) is rotatable in a peripheral direction.

11. Closed belt conveyor system according to Claims 6 to 10, characterised in that the stationary carrying and guiding rollers (94, 114, 128) are arranged alternately on each side of the respective receiving device (91, 104, 105).

12. Closed belt conveyor system according to Claims 6 to 11, characterised in that the end points of the carrying roller axes or the retaining means (95, 113, 129) accommodating them are mounted so that they are radially adjustable.

13. Closed belt conveyor system according to Claims 6 to 12, characterised in that the stationary carrying rollers (94, 114, 128) or the retaining means (95, 113, 129) accommodating them, guided in elongated holes (93, 130) extending radially, are connected to the respective receiving device (91, 104, 105).

14. Closed belt conveyor system according to Claims 1 to 10, characterised in that the points of attachment (8, 9, 10, 11) of the ends of the roller garlands (3, 4) are in each case arranged approximately on the rectilinear extension of the respective major axis (A) of the oval conveyor belt cross-section.

15. Closed belt conveyor system according to Claim 14, characterised in that the distance between the points of attachment (8, 9, 10, 11) of the ends of the roller garlands (12, 13, 14, 15) is from 60 to 80% of the garland length.

16. Closed belt conveyor system according to Claims 14 and 15, characterised in that the distance between the points of attachment (8, 9, 10, 11) of the ends of the roller garlands (12, 13, 14, 15) is from 65 to 75% of the garland length.

17. Closed belt conveyor system according to one of Claims 14 to 16, characterised in that the points of attachment (8, 9, 10, 11) of the ends of the roller garlands (12, 13, 14, 15) are displaceable parallel to or along the major axis (A) of the oval conveyor belt cross-section.

18. Closed belt conveyor system according to one of Claims 14 to 17, characterised in that resiliently yielding spring elements (16, 17, 18, 19) are inserted between the ends of the roller garlands (12, 13, 14, 15) and their points of attachment (8, 9, 10, 11).

19. Closed belt conveyor system according to one of Claims 14 to 18, characterised in that the points of attachment (8, 9, 10, 11) of the ends of the roller garlands (12, 13, 14, 15) are vertically displaceable.

## Revendications

1. Installation de transport à bande tubulaire ou enroulée en tuyau, dans laquelle une courroie transporteuse (5, 33, 46, 98, 106) circule dans des segments de parcours s'étendant en ligne droite et en courbe, en partie sous une forme étalée à plat ou en auget et en partie sous la forme d'un tuyau circulaire, ou ovale dans la région des courbes, formé par une courbure continue dans la direction transversale et par un recouvrement (6, 34, 47, 99, 116, 117) des bords longitudinaux de la courroie, sur une série de stations de rouleaux porteurs et de guidage (2, 36, 87, 90, 111, 112) réparties le long du trajet, et composées de rouleaux porteurs, de guidage et d'entraînement (7, 21, 26, 48, 49, 74, 99, 114, 128) qui coopèrent entre eux, l'un des rouleaux porteurs et de guidage (7, 22, 25, 48, 49, 94, 114) étant prévu dans la région du recouvrement (6, 34, 47, 99, 116, 117) et respectivement dans la région de la section de la courroie qui y est directement opposée et les autres rouleaux porteurs et de guidage (21, 23, 24, 26, 74, 94, 114, 118) étant inclinés par rapport à ces rouleaux porteurs et de guidage opposés caractérisée en ce que, dans les segments du trajet dans lesquels elle défile fermée sur elle-même en un tuyau, la courroie transporteuse (5, 37, 46, 98, 106) présente une section ovale définie par un réglage correspondant des rouleaux porteurs et de guidage (7, 21-26, 48, 49, 74, 94, 114, 128) de manière que l'axe principal (A) de la section ovale de la courroie s'étende sensiblement horizontalement et soit plus long que son axe secondaire (B), en ce que, dans tous les segments du trajet, au moins un rouleau porteur et de guidage (7, 22, 48, 49, 94, 114) de chaque station de rouleaux porteurs et de guidage (2, 36, 87-90, 111, 132) peut être placé sur la région du recouvrement (6, 34, 47, 99, 116, 117) en ce que les rouleaux porteurs et de guidage inclinés (21, 23, 24, 74, 94, 114, 128) forment un angle aigu avec l'axe principal (A).

2. Installation de transport à bande tubulaire selon la revendication 1, caractérisée en ce que l'axe principal (A) de la section ovale de la courroie est plus long de 10 à 50% que son axe secondaire (B).

3. Installation de transport à bande tubulaire selon la revendication 1 ou 2, caractérisée en ce que l'axe principal (A) de la section ovale de la courroie est plus long de 15 à 25% que son axe secondaire (B).

4. Installation de transport à bande tubulaire selon les revendications 1 à 3, caractérisée en ce que les rouleaux porteurs et de guidage (7), regroupés en guirlandes de rouleaux porteurs (3, 4), coopèrent directement avec les stations de rouleaux porteurs et de guidage formés de cadres (2), une guirlande de rouleaux porteurs (3, 4) soutenant la bande tubulaire (5) au-dessus et une autre au-dessous.

5. Installation de transport à bande tubulaire selon les revendications 1 à 3, caractirisée en ce que les rouleaux porteurs et de guidage (22-26), qui soutiennent la bande tubulaire (33) au-dessus et au-dessus à l'aide de supports réglables (27-32), sont fixés rigidement aux stations de rouleaux porteurs et de guidage formés de cadres (20) ou à des éléments de ces stations.

6. Installation de transport à bande tubulaire selon les revendications 1 à 3, caractérisée en ce que les rouleaux porteurs et de guidage (48, 49, 74, 94, 111, 128) sont reliés de façon démontable, dans une version fixe ou en guirlande, à l'intérieur d'une station de rouleaux porteurs et de guidage (36, 87-90, 111, 132) formés d'un cadre, et sont tourillonnés sur une monture (43, 44, 60, 61, 91, 104, 105) qu'on peut faire tourner autour de l'axe longitudinal sur une voie circulaire.

7. Installation de transport à bande tubulaire selon la revendication 6, caractérisée en ce que la monture (104) est composée d'un anneau fermé (107).

8. Installation de transport à bande tubulaire selon la revendication 6, caractérisée en ce que la monture est formée d'un disque (91) en forme de couronne de cercle.

9. Installation de transport à bande tubulaire selon la revendication 6, caractérisée en ce que la monture est composée d'un croissant (43, 44, 120) qui peut éventuellement être fermé à l'aide d'autres éléments (125).

10. Installation de transport à bande tubulaire selon les revendications 6 à 9, caractérisée en ce que la monture (43, 44, 60, 61, 91, 104, 105) peut être fixée au cadre (66, 87-90, 111, 132) à l'aide d'éléments de bridage (96, 119, 131) et qu'on peut la faire tourner dans la direction circonférentielle pour le réglage des rouleaux porteurs et de guidage (48, 49, 94, 114, 128).

11. Installation de transport à bande tubulaire selon les revendications 6 à 10, caractérisée en ce que les rouleaux porteurs et de guidage fixes (94, 114, 128) sont agencés en alternance sur les deux faces de la monture correspondante (91, 104, 105).

12. Installation de transport à bande tubulaire selon les revendications 6 à 11, caractérisée en ce que les points extrêmes des axes des rouleaux porteurs ou des supports (95, 113, 129) qui les reçoivent sont fixés dans des positions réglables dans la direction radiale.

13. Installation de transport à bande tubulaire selon les revendications 6 à 12, caractérisée en ce que les rouleaux porteurs fixes (94, 114, 128) ou les supports (95, 113, 129) qui les reçoivent sont fixés à la monture (91, 104, 105) correspondante en étant guidés dans des trous allongés (93, 130) orientés radialement.

14. Installation de transport à bande tubulaire selon l'une quelconque des revendications 1 à 10 caractérisée en ce que les points de fixation (8, 9, 10, 11) des extrémités (3, 4) des guirlandes de rouleaux sont chaque fois disposés sur le prolongement rectiligne de l'axe principal (A) de la section ovale de la courroie transporteuse.

15. Installation de transport à bande tubulaire selon la revendication 14, caractérisée en ce que la distance d'écartement des points de fixation (8, 9, 10, 11) des extrémités (12, 13, 14, 15) des guirlandes de rouleaux représente 60 à 80% de la longueur de la guirlande.

16. Installation de transport à bande tubulaire selon les revendications 14 et 15, caractérisée en ce que la distance d'écartement des points de fixation (8, 9, 10, 11) des extrémités (12, 13, 14, 15) des guirlandes de rouleaux représente 65 à 75% de la longueur de la guirlande.

17. Installation de transport à bande tubulaire selon l'une quelconque des revendications 14 à 16, caractérisée en ce que les points de fixation (8, 9, 10, 11) des extrémités (12, 13, 14, 15) des guirlandes de rouleaux sont mobiles en translation parallèlement à l'axe principal (A) de la section ovale de la courroie transporteuse, ou le long de cet axe.

18. Installation de transport à bande tubulaire selon l'une quelconque des revendications 14 à 17, caractérisée en ce que des élément élastiques (16, 17, 18, 19), capables de céder élastiquement, sont intercalés entre les extrémités des guirlandes de rouleaux et leurs points de fixation.

19. Installation de transport à bande tubulaire selon l'une quelconque des revendications 14 à 18, caractérisée en ce que les points de fixation (8, 9, 10, 11) des extrémités (12, 13, 14, 15) des guirlandes de rouleaux sont mobiles en translation verticale.

Fig.1

Fig.2

# Fig. 3

# Fig.4

EP 0 340 234 B1

Fig. 5

Fig. 6

Fig. 7

EP 0 340 234 B1

# Fig. 8

# Fig. 9

Fig.10

Fig.11

Fig.12